# EUROPÄISCHE PATENTSCHRIFT

(11) **EP 3 684 667 B1**
(45) Veröffentlichungstag und Bekanntmachung des Hinweises auf die Patenterteilung: **21.12.2022**
(21) Anmeldenummer: 18800510.2
(22) Anmeldetag: 24.10.2018
(51) Int. Cl.: B61D 23/02, B60R 3/02

(54) **SCHIENENFAHRZEUG MIT BEWEGLICHEM FUSSBODENTEIL AN TÜRÖFFNUNG**
RAIL VEHICLE HAVING A MOVABLE FLOOR PART AT A DOOR OPENING
VÉHICULE FERROVIAIRE COMPRENANT UN ÉLÉMENT DE SOL MOBILE AU NIVEAU DE L'OUVERTURE DE LA PORTE

(30) Priorität: 22.11.2017 DE 102017220834
(43) Veröffentlichungstag der Anmeldung: 29.07.2020
(73) Patentinhaber: Siemens Mobility GmbH, 81739 München (DE)
(72) Erfinder: KRÜGER, Axel, 47799 Krefeld (DE)
(86) Internationale Anmeldenummer: PCT/EP2018/079156
(87) Internationale Veröffentlichungsnummer: WO 2019/101463

(56) Entgegenhaltungen:
- DE-A1- 2 454 417
- DE-C- 708 265
- DE-U1- 9 403 982
- JP-B2- 6 157 233

## Beschreibung

Die Erfindung betrifft ein Schienenfahrzeug mit beweglichem Fußbodenteil an einer Türöffnung.

In der Praxis ergeben sich besonders bei in einem Gleisbogen angeordneten Bahnsteigen häufig Horizontalspalte zwischen dem Schienenfahrzeug und dem Bahnsteig, die größer sind als es die anzuwendenden Normen erlauben. Dann ist der Einsatz von Klapp- oder Schiebetritten notwendig, die aber relativ teuer und unzuverlässig sind und zudem viel Bauraum benötigen.

Die Druckschrift JP 6 157233 B2 offenbart ein Schienenfahrzeug mit einer Schiebetür und einem Schiebetritt zur Überbrückung eines Spalts zwischen einer Türöffnung im Wagenkasten und einem Bahnsteig. Der Schiebetritt ist mit der Schiebetür mechanisch derart gekoppelt, dass bei Bewegung der Schiebetür von der geschlossenen in die geöffnete Stellung der Schiebetritt von der eingefahrenen und eingeklappten in die ausgefahrene und ausgeklappte Stellung bewegt wird und umgekehrt. Das Dokument DE 9403982 U1 lehrt ebenfalls ein Schienenfahrzeug mit einer Schwenkschiebetür und mit einem vollständig außerhalb des Wagenkasten angeordneten Klapptritt. Auch die DE 708 265 C betrifft eine ausklappbare Trittstufe, die mit der Bewegung einer Schiebetür gekoppelt und vollständig außerhalb des Wagenkastens angeordnet ist.

Die Aufgabe besteht darin, ein Schienenfahrzeug zu entwickeln, welches eine kostengünstige und bauraumsparende Horizontalspaltreduzierung zwischen Schienenfahrzeug und Bahnsteig bereitstellt.

Erfindungsgemäß wird ein Schienenfahrzeug zur Verfügung gestellt, welches einen Wagenkasten mit einer Türöffnung umfasst. Das Schienenfahrzeug umfasst des Weiteren eine Schwenkschiebetür, welche zwischen einer geschlossenen und einer geöffneten Stellung bewegbar ist, wobei die Schwenkschiebetür in geschlossener Stellung die Türöffnung schließt und in geöffneter Stellung die Türöffnung öffnet. Ferner umfasst das Schienenfahrzeug ein an einem Fußboden des Schienenfahrzeugs angeordnetes oder mit einem Fußboden verbundenes bewegliches Fußbodenteil, welches sich längs zur Türöffnung erstreckt und zwischen einer eingefahrenen und einer ausgefahrenen Stellung bewegbar ist, wobei in der ausgefahrenen Stellung das bewegliche Fußbodenteil durch die Türöffnung zumindest teilweise nach außen über den Wagenkasten herausragt. Ferner ist das bewegliche Fußbodenteil mit der Schwenkschiebetür mechanisch gekoppelt, sodass bei Bewegung der Schwenkschiebetür von der geschlossenen in die geöffnete Stellung das bewegliche Fußbodenteil von der eingefahrenen in die ausgefahrene Stellung bewegt wird, und bei Bewegung der Schwenkschiebetür von der geöffneten in die geschlossene Stellung das bewegliche Fußbodenteil von der ausgefahrenen in die eingefahrene Stellung bewegt wird. Bei Schwenkschiebetüren entsteht typischerweise ein Freiraum beim Ausschwenken der Schwenkschiebetüren. In diesen Freiraum ragt dann das bewegliche Fußbodenteil über die Türöffnung heraus.

Das bewegliche Fußbodenteil ist mit anderen Worten ausgedrückt eine Trittfläche bzw. dient als eine Trittfläche, welche den Bereich des Fußbodens in ausgefahrener Stellung erweitert und von Passagieren betreten werden kann, wobei damit vorteilhaft effektiv der Abstand zwischen Wagenkasten und Bahnsteig an einer Türöffnung reduziert wird. Insbesondere sind bewegliche Fußbodenteile auch als sogenannte Gapfiller bezeichnet. Nach außen über den Wagenkasten herausragend bedeutet mit anderen Worten ausgedrückt, dass das bewegliche Fußbodenteil einen Vorsprung gegenüber dem Wagenkasten ausbildet. Dieser Vorsprung ist nach außen ausgerichtet, d. h. mit anderen Worten ausgedrückt von einem Innenbereich des Schienenfahrzeugs in Richtung eines Außenbereichs des Schienenfahrzeugs durch die Türöffnung ausgerichtet.

Die Erfindung hat den Vorteil, dass das bewegliche Fußbodenteil durch die mechanische Kopplung an die Schwenkschiebetür keinen eigenen Antrieb benötigt. Hierbei wird die Bewegung der Schwenkschiebetür auf die Bewegung des beweglichen Fußbodenteils übertragen. Dabei findet die Bewegung des Fußbodenteils durch die mechanische Kopplung entsprechend gleichzeitig mit der Öffnungs- bzw. Schließbewegung der Schwenkschiebetür statt, wodurch unnötige Wartezeitverluste vermieden werden. Ferner wird keine zusätzliche Einrichtung zum Beispiel zum Notentriegeln der Schwenkschiebetür benötigt, um Stolpergefahren zu vermeiden.

Bevorzugt ist das bewegliche Fußbodenteil in der ausgefahrenen Stellung parallel zum Fußboden ausgerichtet. Das bewegliche Fußbodenteil wirkt somit wie eine Verlängerung des Fußbodens nach außen hin, welcher ohne Höhendifferenz bequem betreten bzw. benutzt werden kann.

Vorzugsweise umfasst die Schwenkschiebetür eine Drehsäule, wobei das bewegliche Fußbodenteil mechanisch mit der Drehsäule der Schwenkschiebetür gekoppelt ist. Eine Drehsäule dreht sich bei Bewegung der Schwenkschiebetür, d. h. insbesondere bei Öffnung bzw. Schließen der Schwenkschiebetür. Durch die mechanische Kopplung an die Drehsäule und damit an die rotatorische Bewegung kann die Drehbewegung der Drehsäule auf die Bewegung des beweglichen Fußbodenteils übertragen werden.

Die Schwenkschiebetür kann auch eine Zug-Druck-Stange umfassen, wobei das bewegliche Fußbodenteil mechanisch mit der Zug-Druck-Stange der Schwenkschiebetür gekoppelt ist.

Vorzugsweise ist das bewegliche Fußbodenteil um eine Drehachse parallel zu einer Längsachse des Schienenfahrzeugs drehbar gelagert, wobei die Bewegung des beweglichen Fußbodenteils von der eingefahrenen in die ausgefahrene Stellung eine Drehbewegung des beweglichen Fußbodenteils um die Drehachse ist. Dies ermöglicht eine einfache mechanische Konstruktion und auch platzsparende Stellungen für das bewegliche Fußbodenteil.

Bevorzugt ist das bewegliche Fußbodenteil in der eingefahrenen Stellung senkrecht zum Fußboden orientiert. Dadurch wird für die Bewegung des beweglichen Fußbodenteils eine einfache Klappbewegung realisiert.

Vorzugsweise ist das bewegliche Fußbodenteil in der eingefahrenen Stellung an der Schwenkschiebetür anliegend positioniert. Dadurch wird möglichst wenig Platz im Innenraum des Schienenfahrzeugs für das bewegliche Fußbodenteil weggenommen.

Das bewegliche Fußbodenteil weist vorzugsweise eine gleiche Breite wie die Schwenkschiebetür auf. Dadurch kann die maximale Breite der Türöffnung für das bewegliche Fußbodenteil genutzt werden.

Vorzugsweise weist das bewegliche Fußbodenteil einen sich in der ausgefahrenen Stellung nach außen konisch verjüngenden Querschnitt auf. Dadurch wird ein kleiner Anstellwinkel erzeugt, welcher das Fußbodenteil zum Bahnsteig ausrichtet. Das Betreten und Aussteigen von Passagieren und Gepäck kann dadurch vereinfacht werden und ferner Gewicht und Material reduziert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein erfindungsgemäßes Schienenfahrzeug in Querschnittsansicht mit beweglichem Fußbodenteil in eingefahrener Stellung,
- Figur 2: ein erfindungsgemäßes Schienenfahrzeug in Querschnittsansicht mit beweglichem Fußbodenteil in ausgefahrener Stellung, und
- Figur 3: ein erfindungsgemäßes Schienenfahrzeug in Seitenansicht.

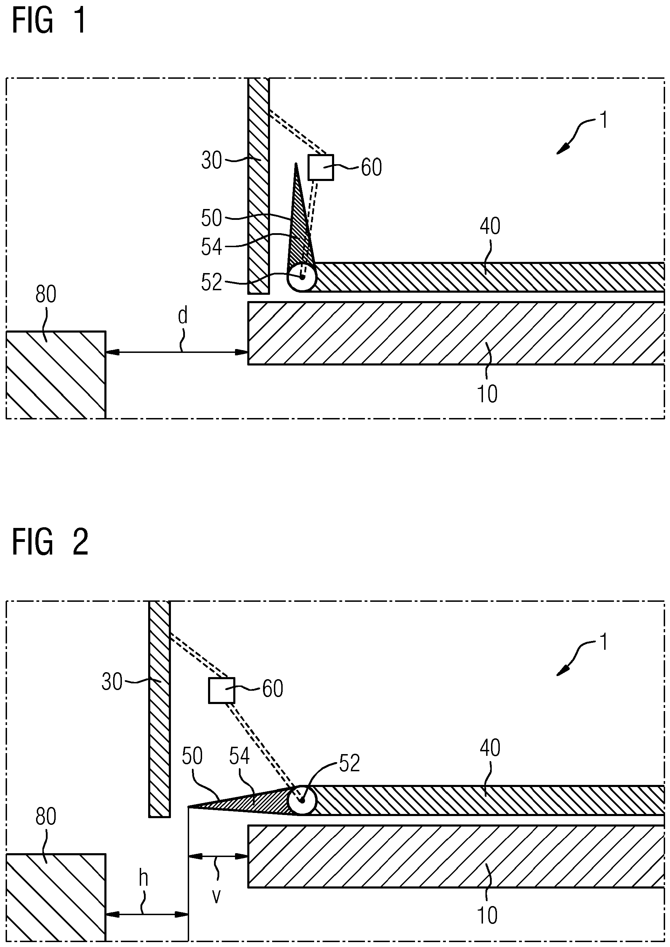

In der Figur 1 und der Figur 2 ist eine Querschnittsansicht eines Schienenfahrzeugs 1 mit einem beweglichen Fußbodenteil 50 in eingefahrener Stellung, siehe Figur 1, bzw. in ausgefahrener Stellung, siehe Figur 2, gezeigt. In der nun folgenden Beschreibung wird auf beide Figuren Bezug genommen.

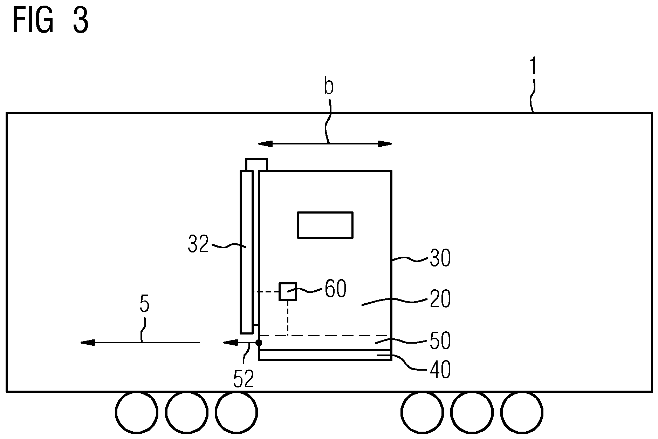

Das in der Figur 1 und der Figur 2 gezeigte Schienenfahrzeug 1 umfasst einen Wagenkasten 10 mit einer Türöffnung 20, wobei letztere in dieser Querschnittsansicht nicht erkennbar ist und für die auf Figur 3 verwiesen wird. Ferner umfasst das Schienenfahrzeug 1 eine Schwenkschiebetür 30, welche zwischen einer geschlossenen und einer geöffneten Stellung bewegbar ist. Die Schwenkschiebetür 30 schließt in geschlossener Stellung die Türöffnung 20 bzw. deckt die Türöffnung 20 ab und öffnet in geöffneter Stellung die Türöffnung 20, sodass Passgiere das Schienenfahrzeug 1 verlassen oder betreten können.

Das Schienenfahrzeug 1 umfasst ferner ein bewegliches Fußbodenteil 50. Das bewegliche Fußbodenteil 50 ist an einem Fußboden 40 des Schienenfahrzeugs 1 angeordnet. Es kann entsprechend auch mit dem Fußboden 40 verbunden sein bzw. sich an den Fußboden 40 anschließen und somit einen Teil des Fußbodens 40 bilden. Das bewegliche Fußbodenteil 50 erstreckt sich dabei längs zur Türöffnung 20. Ferner ist das bewegliche Fußbodenteil 50 zwischen einer eingefahrenen und einer ausgefahrenen Stellung bewegbar. In der ausgefahrenen Stellung ragt das bewegliche Fußbodenteil 50 durch die Türöffnung 20 zumindest teilweise nach außen über den Wagenkasten 10 heraus, siehe dazu Figur 2. Das bewegliche Fußbodenteil 50 dient in der ausgefahrenen Stellung als zusätzliche Trittfläche, die vorteilhaft eine Beabstandung zwischen Schienenfahrzeug 1 und einem Bahnsteig 80 reduziert. Daher kann das bewegliche Fußbodenteil 50 auch als sogenannter Gapfiller bezeichnet werden.

Das bewegliche Fußbodenteil 50 ist dabei mit der Schwenkschiebetür 30 mechanisch gekoppelt. Die mechanische Kopplung ist dabei derart realisiert, dass bei Bewegung der Schwenkschiebetür 30 von der geschlossenen in die geöffnete Stellung das bewegliche Fußbodenteil 50 von der eingefahrenen in die ausgefahrene Stellung bewegt wird. Bei Bewegung der Schwenkschiebetür 30 von der geöffneten in die geschlossene Stellung wird umgekehrt das bewegliche Fußbodenteil 50 von der ausgefahrenen in die eingefahrene Stellung bewegt.

Die mechanische Kopplung zwischen dem beweglichen Fußbodenteil 50 und der Schwenkschiebetür 30 wird in dieser Ausführung durch eine mechanische Kopplungseinheit 60 beschrieben. Die mechanische Kopplungseinheit 60 kann beispielsweise ein Hebel mit einfacher Koppelstange, welche beispielsweise beidseitig mit Gelenkköpfen versehen ist, sein, welche das bewegliche Fußbodenteil 50 mit der Schwenkschiebetür 30, mit bewegten, vorzugsweise rotierenden Teilen der Schwenkschiebetür 30 kraftübertragend verbindet. Entsprechende Führungselemente, Gelenke und Lager können bereitgestellt sein, welche die Bewegung der Schwenkschiebetür 30 in eine Bewegung des beweglichen Fußbodenteils 50 übertragen. Beispielsweise können diese als ein mechanisches Getriebe ausgebildet sein, welche die Öffnungs- bzw. Schließbewegung der Schwenkschiebetür 30 in eine Bewegung des beweglichen Fußbodenteils 50 umsetzen. Eine mechanische Verbindung bzw. Kopplung kann auch an insbesondere rotierenden Elementen der Schwenkschiebetür 30 wie beispielsweise an einer Drehsäule 32, siehe hierzu Figur 3, oder eine Zug-Druck-Stange erfolgen, wobei die Erfindung nicht darauf beschränkt ist und auch an anderen rotierenden Elementen der Schwenkschiebetür 30 die mechanische Kopplung erfolgen kann. Beispielhaft kann die vertikale Hubbewegung bei Verwendung einer Schwenkschiebetür 30, insbesondere einer Schwenkschiebetür, mit Zug-Druckstange beim Ein- bzw. Ausschwenken dazu genutzt werden, das bewegliche Fußbodenteil 50 zu steuern. Dazu muss lediglich ein mit dem beweglichen Fußbodenteil 50, beispielsweise mit einer Drehachse 52 des beweglichen Fußbodenteils 50, verbundener Hebel mittels einer einfachen Koppelstange, welche beidseitig mit Gelenkköpfen versehen ist, mit der Zug-Druckstange, der Drehsäule 32 oder anderen bewegten Teilen der Schwenkschiebetür 30 verbunden werden.

Das bewegliche Fußbodenteil 50 benötigt durch die mechanische Kopplung an die Schwenkschiebetür 30 vorteilhaft keinen eigenen Antrieb, da der Antrieb durch die ohnehin stattfindende Öffnungs- und Schließbewegung der Schwenkschiebetür 30 erzielt wird. Die Bewegung des beweglichen Fußbodenteils 50 erfolgt durch die mechanische Kopplung entsprechend auch zeitgleich mit der Öffnungs- bzw. Schließbewegung der Schwenkschiebetür 30, wodurch keine Zeitverzögerung stattfindet und somit keine unnötige Wartezeit beim Betreten oder Aussteigen des Schienenfahrzeugs 1 entsteht. Eine zusätzliche Einrichtung zum Beispiel zum Notentriegeln der Schwenkschiebetür 30 wird ebenfalls nicht benötigt, um Stolpergefahren zu vermeiden.

Zur weiteren Illustration ist in den Figuren 1 und 2 die Wirkung des beweglichen Fußbodenteils 50 demonstriert. Dazu ist ein Bahnsteig 80 gezeigt, welcher einen Horizontalabstand d von dem Wagenkasten 10 aufweist. In der ausgefahrenen Stellung, siehe Figur 2, ragt das bewegliche Fußbodenteil 50 über den Wagenkasten 10 entsprechend hervor. Der herausragende Teil des beweglichen Fußbodenteils 50 bildet gegenüber dem Wagenkasten 10 einen Vorsprung v aus. Dadurch wird ein effektiver Horizontalabstand h zwischen dem Schienenfahrzeug 1 und dem Bahnsteig 80 erzeugt, welcher h = d - v beträgt und somit den Horizontalabstand d verringert. Grundsätzlich kann v auch größer als d sein. Dann ragt das bewegliche Fußbodenteil 50 sogar über den Bahnsteig 80 heraus.

Das bewegliche Fußbodenteil 50 in der ausgefahrenen Stellung, siehe dazu die Figur 2, ist in dieser Ausführungsform parallel zum Fußboden 40 ausgerichtet. Somit bildet das bewegliche Fußbodenteil 50 in dieser Stellung eine stete Verlängerung des Fußbodens 40 in Richtung des Außenbereichs des Schienenfahrzeugs 1, d. h. nach außen, aus, welche bequem von den Passagieren begangen werden kann.

In dieser Ausführungsform, wobei die Erfindung nicht zwingend darauf beschränkt ist, ist das bewegliche Fußbodenteil 50 um eine Drehachse 52 drehbar gelagert. Dadurch ist die Bewegung des beweglichen Fußbodenteils 50 von der eingefahrenen in die ausgefahrene Stellung eine Drehbewegung um diese Drehachse 52. Eine solche Drehbewegung ist mechanisch stabil und einfach zu realisieren. Ferner kann das bewegliche Fußbodenteil 50 in der eingefahrenen Stellung platzsparend ausgerichtet werden. In anderen Ausführungen kann allerdings auch eine reine Schiebebewegung des beweglichen Fußbodenteils 50 über eine entsprechende mechanische Kopplungseinheit 60 und linearen Führungselementen realisiert werden.

In der eingefahrenen Stellung, siehe dazu die Figur 1, ist in dieser Ausführungsform beispielhaft das bewegliche Fußbodenteil 50 senkrecht zum Fußboden 40 orientiert und insbesondere an der Schwenkschiebetür 30 anliegend positioniert. Dadurch wird der Innenraum des Schienenfahrzeugs 1 möglichst wenig eingeschränkt, sodass weiterhin möglichst viel Platz zur Verfügung gestellt wird. In dieser beispielhaften Ausführungsform weist ferner das bewegliche Fußbodenteil 50 einen sich in der ausgefahrenen Stellung nach außen konisch verjüngenden Querschnitt 54 auf. Somit wird ein kleiner Anstellwinkel erzeugt, welcher das bewegliche Fußbodenteil 50 zum Bahnsteig 80 ausrichtet. Das Betreten und Aussteigen von Passagieren und Gepäck kann dadurch vereinfacht werden und ferner Gewicht und Material reduziert werden.

Die Schwenkschiebetür 30 kann ferner ein oder zwei Türblätter aufweisen, welche bei Öffnung der Schwenkschiebetür ausschwenkt und somit einen Freiraum erzeugt, in welchen das bewegliche Fußbodenteil 50 ausgefahren bzw. ausgeklappt wird. In der Figur 3 ist ein erfindungsgemäßes Schienenfahrzeug 1 in Seitenansicht gezeigt. In dieser Seitenansicht ist eine Türöffnung 20 des Schienenfahrzeugs 1 erkennbar, welche in geschlossener Stellung, siehe dazu Figur 1, von der Schwenkschiebetür 30 geschlossen bzw. abgedeckt wird. Weiterhin zeigt die Figur 3 das bewegliche Fußbodenteil 50 in Frontansicht auf Höhe des Fußbodens. Das bewegliche Fußbodenteil erstreckt sich längs der Türöffnung 20 bzw. parallel zu einer Längsachse 5 des Schienenfahrzeugs 1. Eine Drehachse 52 des beweglichen Fußbodenteils 50 nach der Ausführungsform in Figur 1 bzw. Figur 2 ist parallel zu der Längsachse 5 des Schienenfahrzeugs 1 orientiert. In der vorliegenden Figur ist das bewegliche Fußbodenteil 50 rein beispielhaft in der eingefahrenen Stellung senkrecht zum Fußboden 40 ausgerichtet.

In dieser Ausführungsform ist ferner beispielhaft eine Breite b des beweglichen Fußbodenteils 50 gleich groß wie die Breite der Türöffnung 20 bzw. der Schwenkschiebetür 30 in geschlossener Stellung ausgeführt, sodass also das bewegliche Fußbodenteil 50 in ausgefahrener Stellung, siehe dazu Figur 2, in maximaler Breite zur Verfügung gestellt wird.

In dieser beispielhaften Ausführungsform ist weiterhin die mechanische Kopplung des beweglichen Fußbodenteils 50 an die Schwenkschiebetür 30 schematisch mittels einer mechanischen Kopplungseinheit 60 beschrieben. In dieser beispielhaften Ausführung umfasst die Schwenkschiebetür 30 eine Drehsäule 32, wobei das bewegliche Fußbodenteil 50 mechanisch mit der Drehsäule 32 der Schwenkschiebetür 30 gekoppelt ist, was in der Figur 3 durch die mechanische Kopplungseinheit 60 dargestellt ist. Alternativ kann die Schwenkschiebetür 30 auch eine Zug-Druck-Stange umfassen, an welche die mechanische Kopplung des beweglichen Fußbodenteils 50 erfolgt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der angefügten Ansprüche zu verlassen.

## Patentansprüche

1. Schienenfahrzeug (1), umfassend:
- einen Wagenkasten (10) mit einer Türöffnung (20);
- eine Schiebetür, welche zwischen einer geschlossenen und einer geöffneten Stellung bewegbar ist, wobei die Schiebetür in geschlossener Stellung die Türöffnung (20) schließt und in geöffneter Stellung die Türöffnung (20) öffnet;
- ein an einem Fußboden (40) des Schienenfahrzeugs (1) angeordnetes oder mit dem Fußboden (40) verbundenes bewegliches Fußbodenteil (50), welches sich längs zur Türöffnung (20) erstreckt und zwischen einer eingefahrenen und einer ausgefahrenen Stellung bewegbar ist, wobei in der ausgefahrenen Stellung das bewegliche Fußbodenteil (50) durch die Türöffnung (20) zumindest teilweise nach außen über den Wagenkasten (10) herausragt;
- und wobei das bewegliche Fußbodenteil (50) mit der Schiebetür mechanisch gekoppelt ist, sodass bei Bewegung der Schiebetür von der geschlossenen in die geöffnete Stellung das bewegliche Fußbodenteil (50) von der eingefahrenen in die ausgefahrene Stellung bewegt wird, und bei Bewegung der Schiebetür von der geöffneten in die geschlossene Stellung das bewegliche Fußbodenteil (50) von der ausgefahrenen in die eingefahrene Stellung bewegt wird;
**dadurch gekennzeichnet, dass**
- die Schiebetür eine Schwenkschiebetür (30) ist;
- wobei das bewegliche Fußbodenteil (50) in der ausgefahrenen Stellung über die Türöffnung (20) heraus in einen Freiraum ragt, der beim Ausschwenken der Schwenkschiebetür (30) entsteht.

2. Schienenfahrzeug (1) nach Anspruch 1, wobei das bewegliche Fußbodenteil (50) in der ausgefahrenen Stellung parallel zum Fußboden (40) ausgerichtet ist.

3. Schienenfahrzeug (1) nach einem der vorherigen Ansprüche, wobei die Schwenkschiebetür (30) eine Drehsäule (32) umfasst, wobei das bewegliche Fußbodenteil (50) mechanisch mit der Drehsäule (32) der Schwenkschiebetür (30) gekoppelt ist.

4. Schienenfahrzeug (1) nach einem der Ansprüche 1 bis 2, wobei die Schwenkschiebetür (30) eine Zug-Druck-Stange umfasst, wobei das bewegliche Fußbodenteil (50) mechanisch mit der Zug-Druck-Stange der Schwenkschiebetür (30) gekoppelt ist.

5. Schienenfahrzeug (1) nach einem der vorherigen Ansprüche, wobei das bewegliche Fußbodenteil (50) um eine Drehachse (52) parallel zu einer Längsachse (5) des Schienenfahrzeugs (1) drehbar gelagert ist, wobei die Bewegung des beweglichen Fußbodenteils (50) von der eingefahrenen in die ausgefahrene Stellung eine Drehbewegung des beweglichen Fußbodenteils (50) um die Drehachse (52) ist.

6. Schienenfahrzeug (1) nach Anspruch 5, wobei das bewegliche Fußbodenteil (50) in der eingefahrenen Stellung senkrecht zum Fußboden (40) orientiert ist.

7. Schienenfahrzeug (1) nach Anspruch 6, wobei das bewegliche Fußbodenteil (50) in der eingefahrenen Stellung an der Schwenkschiebetür (30) anliegend positioniert ist.

8. Schienenfahrzeug (1) nach einem der vorherigen Ansprüche, wobei das bewegliche Fußbodenteil (50) eine gleiche Breite (b) wie die Schwenkschiebetür (30) aufweist.

9. Schienenfahrzeug (1) nach einem der vorherigen Ansprüche, wobei das bewegliche Fußbodenteil (50) einen sich in der ausgefahrenen Stellung nach außen konisch verjüngenden Querschnitt (54) aufweist.

## Claims

1. Rail vehicle (1) comprising:
- a car body (10) having a door opening (20);
- a sliding door which is movable between a closed and an opened position, wherein the sliding door in the closed position closes the door opening (20) and in the opened position opens the door opening (20);
- a movable floor part (50) which is disposed on a floor (40) of the rail vehicle (1), or is connected to the floor (40), and extends longitudinally in relation to the door opening (20) and is movable between a retracted and a deployed position, wherein the movable floor part (50) in the deployed position protrudes through the door opening (20) and outwards at least partially beyond the car body (10);
- and wherein the movable floor part (50) is mechanically coupled to the sliding door such that, in the movement of the sliding door from the closed to the opened position, the movable floor part (50) is moved from the retracted to the deployed position, and in the movement of the sliding door from the opened to the closed position, the movable floor part (50) is moved from the deployed to the retracted position;
**characterized in that**
- the sliding door is a folding-sliding door (30);
- wherein the movable floor part (50) in the deployed position protrudes beyond the door opening (20) into a void which is created when the folding-sliding door (30) is pivoted outwards.

2. Rail vehicle (1) according to Claim 1, wherein the movable floor part (50) in the deployed position is aligned so as to be parallel to the floor (40).

3. Rail vehicle (1) according to either of the preceding claims, wherein the folding-sliding door (30) comprises a swivel column (32), wherein the movable floor part (50) is mechanically coupled to the swivel column (32) of the folding-sliding door (30).

4. Rail vehicle (1) according to either of Claims 1 and 2, wherein the folding-sliding door (30) comprises a push-pull bar, wherein the movable floor part (50) is mechanically coupled to the push-pull bar of the folding-sliding door (30).

5. Rail vehicle (1) according to one of the preceding claims, wherein the movable floor part (50) is mounted so as to be rotatable about a rotation axis (52) parallel to a longitudinal axis (5) of the rail vehicle (1), wherein the movement of the movable floor part (50) from the retracted to the deployed position is a rotating movement of the movable floor part (50) about the rotation axis (52) .

6. Rail vehicle (1) according to Claim 5, wherein the movable floor part (50) in the retracted position is oriented so as to be perpendicular to the floor (40).

7. Rail vehicle (1) according to Claim 6, wherein the movable floor part (50) in the retracted position is positioned so as to lie against the folding-sliding door (30) .

8. Rail vehicle (1) according to one of the preceding claims, wherein the movable floor part (50) has a width (b) identical to that of the folding-sliding door (30).

9. Rail vehicle (1) according to one of the preceding claims, wherein the movable floor part (50) in the deployed position has a cross section (54) that conically tapers towards the outside.

## Revendications

1. Véhicule (1) ferroviaire, comprenant :
- une caisse (10) ayant une baie (20) de porte ;
- une porte coulissante mobile entre une position fermée et une position ouverte, la porte coulissante fermant dans la position fermée la baie (20) de porte et ouvrant dans la position ouverte la baie (20) de porte ;
- une partie (50) de plancher mobile, qui est montée sur un plancher (40) du véhicule (1) ferroviaire ou qui est reliée au plancher (40), qui s'étend le long de la baie (20) de porte et qui est mobile entre une position rentrée et une position sortie, dans lequel, dans la position sortie, la partie (50) mobile de plancher dépasse par la baie (20) de porte au moins en partie vers l'extérieur de la caisse (10) ;
- et dans lequel, la partie (50) mobile de plancher est reliée mécaniquement à la porte coulissante, de manière à ce que, lorsque la porte coulissante passe de la position fermée à la position ouverte, la partie (50) mobile de plancher passe de la position rentrée à la position sortie et, lorsque la porte coulissante passe de la position ouverte à la position fermée, la partie (50) mobile de plancher passe de la position sortie à la position rentrée ;
**caractérisé en ce que**
- la porte coulissante est une porte (30) louvoyante - coulissante ;
- dans lequel la partie (50) mobile de plancher pénètre, dans la position sortie, au-delà de la baie (20) de la porte dans un espace libre, qui se crée lors du louvoiement de la porte (30) louvoyante - coulissante.

2. Véhicule (1) ferroviaire suivant la revendication 1, dans lequel la partie (50) mobile du plancher est, dans la position sortie, dirigée parallèlement au plancher (40).

3. Véhicule (1) ferroviaire suivant l'une des revendications précédentes, dans lequel la porte (30) louvoyante - coulissante a une colonne (32) de rotation, dans lequel la partie (50) mobile de plancher est reliée mécaniquement à la colonne (32) de rotation de la porte (30) louvoyante - coulissante.

4. Véhicule (1) ferroviaire suivant l'une des revendications 1 à 2, dans lequel la porte (30) louvoyante - coulissante comprend une barre de traction - poussée, dans lequel la partie (50) mobile de plancher est reliée mécaniquement à la barre de traction - poussée de la porte (30) louvoyante - coulissante.

5. Véhicule (1) ferroviaire suivant l'une des revendications précédentes, dans lequel la partie (50) mobile du plancher est montée tournante autour d'un axe (52) de rotation parallèle à un axe (5) longitudinal du véhicule (1) ferroviaire, le passage de la partie (50) mobile du plancher de la position rentrée à la position sortie étant un mouvement de rotation de la partie (50) mobile de plancher autour de l'axe (52) de rotation.

6. Véhicule (1) ferroviaire suivant la revendication 5, dans lequel la partie (50) mobile du plancher est, dans la position rentrée, orientée perpendiculairement au plancher (40).

7. Véhicule (1) ferroviaire suivant la revendication 6, dans lequel la partie (50) mobile du plancher est, dans la position rentrée, placée de manière à s'appliquer à la porte (30) louvoyante - coulissante.

8. Véhicule (1) ferroviaire suivant l'une des revendications précédentes, dans lequel la partie (50) mobile de plancher a la même largeur (b) que la porte (30) louvoyante - coulissante.

9. Véhicule (1) ferroviaire suivant l'une des revendications précédentes, dans lequel la partie (50) mobile de plancher a, dans la position sortie, une section (54) transversale diminuant coniquement vers l'extérieur.
